# EUROPÄISCHE PATENTSCHRIFT

(11) **EP 3 954 730 B1**
(45) Veröffentlichungstag und Bekanntmachung des Hinweises auf die Patenterteilung: **17.09.2025**
(21) Anmeldenummer: 21190585.6
(22) Anmeldetag: 10.08.2021
(51) Int. Cl.: B29C 67/20, C08J 9/00, C08J 9/33

(54) **KONTINUIERLICHES VERFAHREN ZUR HERSTELLUNG EINES FUNKTIONSWERKSTOFFS, EINE ROHMASSE FÜR EINEN FUNKTIONSWERKSTOFF UND EIN FUNKTIONSWERKSTOFF**
CONTINUOUS METHOD FOR PRODUCING A FUNCTIONAL MATERIAL, A RAW MASS FOR A FUNCTIONAL MATERIAL AND A FUNCTIONAL MATERIAL
PROCÉDÉ CONTINU DE FABRICATION D'UNE MATIÈRE FONCTIONNELLE, MATIÈRE PREMIÈRE POUR UNE MATIÈRE FONCTIONNELLE ET MATIÈRE FONCTIONNELLE

(30) Priorität: 13.08.2020 DE 102020121361
(43) Veröffentlichungstag der Anmeldung: 16.02.2022
(73) Patentinhaber: puren GmbH, 88662 Überlingen (DE)
(72) Erfinder: BOMMER, Hans, 88662 Überlingen (DE)
(74) Vertreter: Daub, Thomas

(56) Entgegenhaltungen:
- EP-A1- 2 366 532
- EP-A2- 0 245 544
- EP-B1- 3 371 250
- WO-A1-2012/091557
- DE-A1- 4 113 056
- US-A- 3 726 624

## Beschreibung

### Stand der Technik

Die Erfindung betrifft ein Verfahren zur Herstellung eines Funktionswerkstoffs und den damit hergestellten Funktionswerkstoff.

Aus "Recycling von Polyurethan-Kunststoffen" von W. Raßhofer, Heidelberg: Hüthig GmbH, 1994, Seiten 386-390, ISBN 3-929471-08-6 ist die Herstellung eines Funktionswerkstoffs aus Polyurethan-Hartschaum und einem Bindemittel in einem diskontinuierlichen Verfahren bekannt. Insbesondere verbleibt hierbei eine Rohmasse mittels einer Presse verpresst, wobei die Rohmasse für eine Formstandzeit bis zu einem Aushärten zu dem Funktionswerkstoff in der ruhenden Presse verbleibt.

In der EP 3 371 250 B1 wird ein derart hergestellter Funktionswerkstoff beschrieben, welcher unter anderem aus zerkleinertem PUR-Hartschaum (Polyurethan-Hartschaum) und/oder zerkleinertem PIR-Hartschaum (Polyisocyanurat-Hartschaum) und einem Bindemittel hergestellt wird.

Aufgrund eines Fließverhaltens von Schüttgut aus zerkleinertem PUR/PIR-Hartschaum und der Schüttguthöhen sind geforderte Qualitäten des Funktionswerkstoffs nur durch relativ breite Besäumungen sicherzustellen, weil am Anfang und Ende einer Platte aus dem Funktionswerkstoff und an den Rändern bei Druckbeaufschlagung das Schüttgut nach außen fließt und sogenannte Weichzonen entstehen, die nachträglich beseitigt werden müssen. Vermeiden könnte man solche Weichzonen, in dem man eine Vorrichtung einsetzt, die das Pressgut durch einen Rahmen umschließt und die Presse passgenau in den Rahmen einfährt. Das wäre allerdings sehr aufwendig und würde viel Zeit beanspruchen durch eine erschwerte Entformung und wäre unwirtschaftlich.

Aus der WO 2019/229007 A1 ist ein kontinuierliches Pressverfahren für Faserverbundplatten bekannt. Üblicherweise werden bei kontinuierlichen Prozessen, in denen mittels Druck und Temperatur Materialien verdichtet werden sollen, sogenannte Durchlaufheizpressen-Anlagen eingesetzt. Große Bedeutung haben solche Pressen seit vielen Jahrzehnten in der Holzindustrie, die zahlreiche Typen an ein- und mehrschichtigen Holzspanplatten mit und ohne Oberflächenbeschichtungen, mit fester und lockerer Struktur fertigt.

Aus EP 0 245 544 A2 und EP 2 366 532 A1 sind kontinuierliche Verfahren zur Herstellung eines Funktionswerkstoffs aus einem Bindemittel und Polyurethanresten, welche als Pellets bzw. Kügelchen vorliegen, bekannt. Die Pellets bzw. Kügelchen werden durch ein gelochtes Förderband hindurch mit Dampf behandelt, um das Bindemittel auszuhärten.

Aus US 3 726 624 A ist ein kontinuierliches Verfahren zur Herstellung eines Funktionswerkstoffs aus Bindemittel und Polyurethanresten bekannt, welche durch eine Schlagmühle auf bis zu 5/16 Inch² zerkleinert werden.

Entscheidend für eine erfolgreiche Produktion und Erreichen gewünschter technischer Produkteigenschaften des Funktionswerkstoffs sind jedoch die zu verpressenden Materialien, eine Rezeptur einer aus den Materialien hergestellten Rohmasse und deren Anpassungen an einen Pressprozess.

Die Aufgabe der Erfindung besteht insbesondere darin, ein gattungsgemäßes Verfahren mit verbesserten Eigenschaften hinsichtlich einer notwendigen Produktionszeit für den Funktionswerkstoff und hinsichtlich einer Güte des damit hergestellten Funktionswerkstoffs bereitzustellen. Die Aufgabe wird erfindungsgemäß durch die Merkmale des Anspruchs 1 gelöst, während vorteilhafte Ausgestaltungen und Weiterbildungen der Erfindung den Unteransprüchen entnommen werden können.

### Vorteile der Erfindung

Die Erfindung geht aus von einem Verfahren zur Herstellung eines Funktionswerkstoffs, wobei in zumindest einem Mischschritt ein Hartschaum und zumindest ein, insbesondere bei Raumtemperatur und Standarddruck flüssiges, Bindemittel zu einer Rohmasse vermengt werden und wobei in zumindest einem Pressschritt die Rohmasse zu dem Funktionswerkstoff verpresst wird, wobei das Verfahren zumindest von dem Mischschritt bis einschließlich des Pressschritts kontinuierlich abläuft, wobei in dem Pressschritt die Rohmasse einer Durchlaufpresse kontinuierlich zugeführt, die Rohmasse kontinuierlich von der Durchlaufpresse verpresst und der Funktionswerkstoff kontinuierlich von der Durchlaufpresse ausgegeben wird.

Es wird vorgeschlagen, dass der Hartschaum in dem zumindest einem Mischschritt pulverisiert ist, zumindest im Wesentlichen aus einem Duroplast gebildet ist und eine durchschnittliche Partikelgröße kleiner als 5 mm aufweist. Der Funktionswerkstoff ist beispielsweise als Wärmedämmstoff und/oder als Werkstoff, insbesondere für Gehäuse, Möbel, Bauwesen, Gebäude, Gebäudeinterieur, Fahrzeuginterieur oder dergleichen, verwendbar. Besonders bevorzugt ist der Funktionswerkstoff zusätzlich, insbesondere zusätzlich zu einer wärmedämmenden Funktion, als Strukturwerkstoff ausgebildet. Insbesondere weist der Funktionswerkstoff eine Wärmeleitfähigkeit gemäß EN 12667 von höchstens 0,10 W/(m•K), vorzugsweise von weniger als 0,07 W/(m•K) auf. Der Funktionswerkstoff weist insbesondere eine Rohdichte größer als 150 kg/m³, bevorzugt größer als 300 kg/m³, besonders bevorzugt größer als 450 kg/m³, auf. Vorzugsweise weist der Funktionswerkstoff eine Druckspannung nach DIN EN 826 größer als 1 MPa, bevorzugt größer als 3 MPa, besonders bevorzugt größer als 6 MPa, auf.

Optional umfasst das Verfahren einen Zerkleinerungsschritt, in welchem Objekte, welche den Hartschaum enthalten und/oder zumindest im Wesentlichen aus dem Hartschaum gebildet sind, mechanisch zerkleinert werden. Darunter, dass ein Objekt "im Wesentlichen aus einem Material gebildet ist" soll insbesondere verstanden werden, dass zumindest 50 %, bevorzugt mehr als 75 %, besonders bevorzugt mehr als 90 %, eines Gesamtvolumens und/oder einer Gesamtmasse des Objekts aus dem Material gebildet ist. Vorzugsweise wird der Hartschaum, insbesondere vor dem Zerkleinerungsschritt, während des Zerkleinerungsschritts und/oder nach dem Zerkleinerungsschritt von anderen Bestandteilen der Objekte getrennt. Insbesondere wird der Hartschaum in dem Zerkleinerungsschritt pulverisiert, beispielsweise durch Mahlen, durch Schreddern und/oder durch Häckseln. Alternativ liegt der Hartschaum bereits in pulverisierter Form vor. Der pulverisierte Hartschaum ist insbesondere zumindest im Wesentlichen aus Hartschaum-Partikeln gebildet, insbesondere welche jeweils eine Zellstruktur des Hartschaums aufweisen. Jeder einzelne Hartschaum-Partikel zumindest einer Mehrzahl der Hartschaum-Partikel des pulverisierten Hartschaums weist in jede Richtung eine zumindest im Wesentlichen gleich große maximale räumliche Erstreckung auf. Darunter, dass zwei Werte "im Wesentlichen gleich groß" sind, soll insbesondere verstanden werden, dass ein Größerer von beiden bildbaren Quotienten der Werte kleiner ist als 5, bevorzugt kleiner als 3, besonders bevorzugt kleiner als 2. Maximale räumliche Erstreckungen unterschiedlicher Hartschaum-Partikel können zumindest im Wesentlichen gleich groß sein oder unterschiedlich groß ausgebildet sein. Vorzugsweise weist der pulverisierte Hartschaum eine mehlartige Konsistenz auf. Insbesondere ist eine durchschnittliche Partikelgröße des pulverisierten Hartschaums kleiner als 1 mm, besonders bevorzugt kleiner als 500 µm. Bevorzugt ist eine durchschnittliche Partikelgröße zumindest größer als 500 nm, insbesondere größer als 1 µm, besonders bevorzugt größer als 100 µm. Das Verfahren umfasst vorzugsweise einen Hartschaumdosierschritt, in welchem der pulverisierte Hartschaum von einem Pulversilo oder unmittelbar von einer Zerkleinerungsanlage zur Pulverisierung des Hartschaums an einen Stetigförderer übergeben wird. Der Stetigförderer kann als mechanischer Förderer, als Schwerkraftförderer oder als Strömungsförderer ausgebildet sein. In dem Hartschaumdosierschritt wird der pulverisierte Hartschaum insbesondere kontinuierlich mit einer einstellbaren Hartschaumrate an den Stetigförderer übergeben.

Das Bindemittel liegt, insbesondere unter Laborbedingungen, vor einer Aushärtung des Bindemittels vorzugsweise als Flüssigkeit vor. Bevorzugt ist das Bindemittel organisch, alternativ anorganisch. Vorzugsweise umfasst das Bindemittel ein Isocyanat. Besonders bevorzugt umfasst das Bindemittel zumindest ein Methylendiphenylisocyanat (MDI). Alternativ oder zusätzlich umfasst das Bindemittel Toluol-2, 4-diisocyanat (TDI), Harnstoff oder Wasserglas. Das Verfahren umfasst insbesondere einen Bindemitteldosierschritt, in welchem das Bindemittel zu dem pulverisierten Hartschaum hinzugegeben wird. In dem Bindemitteldosierschritt wird das Bindemittel insbesondere kontinuierlich mit einer einstellbaren Bindemittelrate zu dem pulverisierten Hartschaum hinzugegeben.

In dem Mischschritt werden der pulverisierte Hartschaum und das Bindemittel kontinuierlich vermischt, insbesondere mittels eines Durchlaufmischers, besonders bevorzugt mittels eines Schneckenextruders. Vorzugsweise führt der Stetigförderer den pulverisierten Hartschaum kontinuierlich zu dem Durchlaufmischer. Vorzugsweise wird das Bindemittel innerhalb des Durchlaufmischers zu dem pulverisierten Hartschaum hinzugegeben, insbesondere eingesprüht. Insbesondere wird in dem Mischschritt die Rohmasse kontinuierlich erstellt. Der Durchlaufmischer gibt insbesondere am Ende des Mischschritts die Rohmasse kontinuierlich aus und übergibt sie insbesondere kontinuierlich an einen weiteren Stetigförderer, insbesondere an einen Bandförderer und/oder einen Gliederbandförderer. Insbesondere erstellt der Durchlaufmischer ein Endlosband an Rohmasse, welches kontinuierlich von dem weiteren Stetigförderer zu einer, insbesondere kontinuierlich betriebenen, Durchlaufpresse, insbesondere einer Heizdurchlaufpresse, befördert wird.

Vorzugsweise umfasst das Verfahren zumindest einen Vorpressschritt, in welchem die Rohmasse mittels einer Durchlaufvorrichtung vorverdichtet wird. Optional umfasst das Verfahren zumindest einen Schichtungsschritt, bei welchem auf die, insbesondere vorverdichtete Rohmasse, eine weitere Schicht der Rohmasse oder einer weiteren Rohmasse, welche insbesondere eine andere Qualität des Hartschaums und/oder einen anderen Hartschaum als die Rohmasse umfasst, aufgebracht wird.

In dem Pressschritt wird die, insbesondere vorverdichtete, Rohmasse, insbesondere sofern vorhanden zusammen mit den weiteren Schichten, kontinuierlich verpresst.

Vorzugsweise wird die Rohmasse in dem Pressschritt mit einer Temperatur beaufschlagt, insbesondere um eine chemische Reaktion, insbesondere eine Polyaddition und/oder Polykondensation, des Bindemittels zu beschleunigen. In dem Pressschritt wird, insbesondere im Gegensatz zu einer im Takt betriebenen Durchlaufvorrichtung oder Etagenpresse, die Rohmasse der Durchlaufpresse kontinuierlich zugeführt, die Rohmasse kontinuierlich von der Durchlaufpresse verpresst und der Funktionswerkstoff kontinuierlich von der Durchlaufpresse ausgegeben. Die Durchlaufpresse setzt die Rohmasse insbesondere in ein Endlosband des Funktionswerkstoffs um, welches von dem weiteren Stetigförderer kontinuierlich zu einer Konfektionierungsstation befördert wird. Vorzugsweise umfasst das Verfahren einen Konfektionierungsschritt, bei welchem von dem Endlosbad des Funktionswerkstoffs ein Teilabschnitt abgetrennt wird.

Eine kontinuierlich betreibbare Fertigungsanlage für den Funktionswerkstoff umfasst insbesondere den Stetigförderer, den Durchlaufmischer, den weiteren Stetigförderer, die Durchlaufpresse zum Verpressen, die Durchlaufvorrichtung zum Vorverdichten, die Konfektionierungsstation, ein Bindemitteltank und eine Bindemitteldosiervorrichtung, das Pulversilo und eine Dosiervorrichtung für den pulverisierten Hartschaum und/oder die Zerkleinerungsanlage sowie optional je zumindest eine Lager- und Dosiervorrichtung für einen optionalen Füllstoff und/oder für eine optionale Deckschicht. Das Verfahren wird insbesondere während eines aktiven regulären Betriebszustands der Fertigungsanlage, insbesondere nach einem Anfahren der Fertigungsanlage, durchgeführt. Unter "kontinuierlich" soll, insbesondere im Gegensatz zu einem diskontinuierlichen Start-Stopp-Betrieb, vorzugsweise für die Dauer des Verfahrens stetig fortlaufend, insbesondere unterbrechungsfrei, verstanden werden. Das Verfahren wird insbesondere spätestens durch ein manuelles oder automatisches Beenden des regulären Betriebszustands der Fertigungsanlage beendet, beispielsweise durch ein Herunterfahren der Fertigungsanlage, durch ein Auslösen eines Fehlerzustands und/oder eines Wartungszustands der Fertigungsanlage oder dergleichen. Insbesondere werden zumindest der Hartschaumdosierschritt, der Bindemitteldosierschritt, der Mischschritt, der Vorpressschritt und/oder der Pressschritt zur gleichen Zeit an verschiedenen Stellen des Endlosbandes an Rohmasse oder eines Vorläufers der Rohmasse durchgeführt. Bevorzugt läuft das Verfahren, insbesondere im Gegensatz zu einem diskontinuierlichen Verfahren, zumindest von dem Mischschritt, besonders bevorzugt zumindest von dem Hartschaumdosierschritt, optional von dem Zerkleinerungsschritt, an bis zumindest einschließlich dem Pressschritt, bevorzugt bis einschließlich des Konfektionierungsschritts, automatisiert, insbesondere ohne Eingriff eines Bedieners, ab. Insbesondere steuert oder regelt eine Steuereinheit der Fertigungsanlage die Fertigungsanlage während des Verfahrens, insbesondere während des Hartschaumdosierschritts, des Bindemitteldosierschritts, des Mischschritts, des Vorpressschritts, des Pressschritts und/oder des Konfektionierungsschritts, vorzugsweise vollautomatisch. Unter einer "Steuereinheit" soll insbesondere eine Einheit mit zumindest einer Steuerelektronik verstanden werden. Unter einer "Steuerelektronik" soll insbesondere eine Einheit mit einer Prozessoreinheit und mit einer Speichereinheit sowie mit einem in der Speichereinheit gespeicherten Betriebsprogramm verstanden werden. Insbesondere steuert oder regelt die Steuereinheit die Fertigungsanlage ohne Eingriff eines Bedieners, insbesondere zumindest nach einer Voreinstellung der Fertigungsanlage oder nach einer Eingabe von Prozessparametern in das Betriebsprogramm durch einen Bediener.

Durch die erfindungsgemäße Ausgestaltung kann eine aufgrund eines Fließverhaltens der Rohmasse notwendige Besäumung vorteilhaft gering gehalten werden. Insbesondere kann auf eine Besäumung senkrecht zu einer Förderrichtung der Rohmasse, welche insbesondere eine Abmessung einer Platte vorgibt, verzichtet werden. Insbesondere kann eine Weichzone, welche an einem Rand eines Pressbereichs entsteht, vorteilhaft klein gehalten werden. Insbesondere kann ein Verschnitt, um die Weichzone von dem Funktionswerkstoff mit den gewünschten Eigenschaften zu entfernen, vorteilhaft kleingehalten werden. Insbesondere kann auf kosten- und/oder zeitaufwändige Maßnahmen zu einer Begrenzung der Weichzone, beispielsweise einer zu einer diskontinuierlichen Presse passgenauen Rahmenkonstruktion für die Rohmasse, verzichtet werden. Insbesondere können hochwertige Deckschichten mit einem vorteilhaft kleinen Verschnitt bereits auf die Rohmasse aufgebracht werden, so dass der Funktionswerkstoff mit hochwertigen Deckschichten vorteilhaft kostengünstig versehen werden kann. Insbesondere kann auf einen gesonderten Arbeitsschritt zu einer Aufbringung der Deckschichten auf die insbesondere fertig zugeschnittenen Platten aus dem Funktionswerkstoff verzichtet werden. Weiter kann auch bei einem Funktionswerkstoff mit hoher Materialstärke, insbesondere von mehr als 20mm, für deren Durchhärtung eine große Menge Wasserdampf notwendig ist, ein Dampfdruck innerhalb der Rohmasse und des Funktionswerkstoffs vorteilhaft gering gehalten werden und insbesondere kann eine schlagartige Druckreduktion bei Öffnen der diskontinuierlichen Presse vermieden werden. Dadurch kann ein Risiko einer Rissbildung in dem Funktionswerkstoff nach dem Pressschritt vorteilhaft gering gehalten werden. Insbesondere kann bei einem Funktionswerkstoff mit niedriger Materialstärke, insbesondere weniger als 10 mm, eine notwendige Zeitdauer des Pressschritts vorteilhaft gering gehalten werden, insbesondere kürzer als eine Zeitdauer für eine Vorbereitung der Rohmasse. Dadurch kann eine vorteilhaft hohe Fertigungskapazität erreicht werden. Insbesondere kann der Funktionswerkstoff vorteilhaft schnell hergestellt werden. Weiterhin kann vorteilhaft auf eine Kühlpresse verzichtet werden. Ferner kann eine Länge einer Platte aus dem Fertigungsmaterial vorteilhaft beliebig gewählt werden und ist insbesondere nicht durch eine Abmessung der Durchlaufpresse begrenzt. Insbesondere kann auf eine Umrüstung der Fertigungsanlage zu einer Änderung einer Länge der Platte verzichtet werden.

Ferner wird vorgeschlagen, dass in zumindest einem Verfahrensschritt der pulverisierte Hartschaum aus Polyurethan-Hartschaum, kurz PUR, aus Polyisocyanurat-Hartschaum, kurz PIR, und/oder aus Phenol-Hartschaum hergestellt wird. Der Hartschaum ist insbesondere zumindest im Wesentlichen druckfest. Unter "zumindest im Wesentlichen druckfest" soll insbesondere nach Norm EN 826 und vorteilhaft einem Druck von mehr als 100 kPa, bevorzugt mehr als 120 kPa, widerstehend verstanden werden. Insbesondere soll unter "PUR" ein Hartschaumstoff gemäß DIN EN 13165 und/oder EN 14308 verstanden werden. Insbesondere soll unter "PIR" ein Hartschaumstoff gemäß EN 14308 und/oder ASTM C 1289 verstanden werden. Der Hartschaum weist vor einer Pulverisierung vorzugsweise eine Wärmeleitfähigkeit, insbesondere gemäß EN 12667, von weniger als 0,037 W/Km auf. Bevorzugt weist der Hartschaum vor einer Pulverisierung eine Wärmeleitfähigkeit gemäß EN 12667 von weniger als 0,03 W/Km, besonders bevorzugt von weniger als 0,025 W/Km, auf. Die Hartschaum-Partikel werden insbesondere durch mechanische Zerkleinerung gewonnen, sodass die Zellstruktur des Hartschaums in den Hartschaum-Partikeln zumindest teilweise erhalten bleibt. Insbesondere ist eine Wärmeleitfähigkeit der einzelnen Hartschaum-Partikel zumindest im Wesentlichen gleich groß wie die Wärmeleitfähigkeit des Hartschaums vor der Zerkleinerung. Insbesondere begrenzt der zerkleinerte Hartschaum eine Wärmeleitung innerhalb der Rohmasse. Vorzugsweise wird dem Bindemittel in dem Mischschritt und/oder in einem dem Mischschritt vorgelagerten Bindemittelmischschritt Wasser, insbesondere eine wässrige Lösung, beigemengt. Insbesondere wird das Wasser in dem Pressschritt verdampft. Vorzugsweise wird das verdampfte Wasser zumindest größtenteils in dem Pressschritt für eine Aushärtedauer, welche insbesondere einer Durchlaufdauer durch die Durchlaufpresse entspricht, in der Rohmasse eingeschlossen. Optional wird das verdampfte Wasser von der Rohmasse und/oder von dem Funktionswerkstoff teilweise während der Aushärtedauer und bevorzugt zumindest größtenteils nach dem Pressschritt, insbesondere kontinuierlich, abgegeben. Unter "größtenteils" soll insbesondere zumindest zu 50 %, bevorzugt zumindest zu 75 %, besonders bevorzugt zumindest zu 90 %, eines Gesamtvolumens und/oder einer Gesamtmasse verstanden werden. Insbesondere ist das verdampfte Wasser zu einem Wärmeaustausch innerhalb der Rohmasse vorgesehen und insbesondere zu einer gleichmäßigen Aushärtung des Bindemittels vorgesehen. Unter "vorgesehen" soll insbesondere speziell ausgelegt und/oder speziell ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Durch die erfindungsgemäße Ausgestaltung kann der Funktionswerkstoff vorteilhaft ressourcenschonend, insbesondere aus Industriereststoffen und/oder Verschnitt, hergestellt werden.

Weiterhin wird vorgeschlagen, dass in zumindest einem Verfahrensschritt dem Bindemittel aktiviertes Wasser mit einem Masseanteil eines Aktivators von höchstens 3 % beigemengt wird. Das aktivierte Wasser ist insbesondere das bereits genannte, zur Verdampfung vorgesehene Wasser, welches zusätzlich mit dem Aktivator versetzt ist. Der Masseanteil des Aktivators bezieht sich insbesondere auf eine Gesamtmasse einer wässrigen Lösung aus dem Wasser und dem Aktivator. Insbesondere wird in dem Bindemittelvormischschritt der Aktivator in dem Wasser gelöst, um die wässrige Lösung herzustellen. Als Aktivator wird beispielsweise Kaliumacetat, Kaliumoktoat, ein Aminaktivator und/oder ein anderer, dem Fachmann als sinnvoll erscheinender Aktivator beigemengt. Bevorzugt umfasst der Aktivator einen Masseanteil von weniger als 2 %, besonders bevorzugt von weniger als 1 %. Vorzugsweise umfasst der Aktivator einen Masseanteil von zumindest 0,01 %, besonders bevorzugt von zumindest 0,05 %. Das Wasser kann vor einer Zugabe des Aktivators eine Qualität von Brauchwasser, gefiltertem Wasser, destilliertem Wasser, vollentsalztem Wasser oder Reinstwasser aufweisen. Alternativ wird dem Bindemittel das Wasser, insbesondere ohne Aktivator, beigemengt. Insbesondere wird eine Aushärtedauer der Rohmasse unter anderem durch ein Verhältnis einer Menge des Wassers und des Aktivators zu einer Materialstärke der Rohmasse und/oder des Funktionswerkstoffs vorgegeben. Durch die erfindungsgemäße Ausgestaltung kann bei gleicher Aushärtedauer die erforderliche Menge des Wassers vorteilhaft niedrig gehalten werden und/oder bei gleicher Wassermenge die Aushärtedauer vorteilhaft kurz gehalten werden. Insbesondere kann bei einer geringer verwendeten Wassermenge ein Dampfdruck innerhalb der Durchlaufpresse vorteilhaft niedrig gehalten werden und/oder die Rohmasse mit einer vorteilhaft hohen Temperatur beaufschlagt werden, sodass der gleiche Dampfdruck mit weniger Wasser erreicht wird. Insbesondere kann eine vorteilhaft zuverlässige Aushärtung des Bindemittels erreicht werden. Es kann insbesondere eine vorteilhaft schnelle Aushärtung des Bindemittels erreicht werden. Insbesondere kann eine Fertigungskapazität weiter gesteigert werden. Ferner kann ein Risiko einer Rissbildung, insbesondere trotz schnellerer Aushärtung, aufgrund eines plötzlichen Abfalls des Dampfdrucks an einer Ausgabe der Durchlaufpresse vorteilhaft gering gehalten werden.

Darüber hinaus wird vorgeschlagen, dass dem pulverisierten Hartschaum in dem Mischschritt das Bindemittel mit einem Masseanteil von weniger als 10 % bezogen auf eine Gesamtmasse des Funktionswerkstoffs beigemengt wird. Bevorzugt beträgt der Masseanteil des Bindemittels an dem Funktionswerkstoff weniger als 9 %, besonders bevorzugt weniger als 8 %. Optional wird das Bindemittel mit einem Masseanteil an dem Funktionswerkstoff von zumindest 5 %, insbesondere mehr als 6%, dem pulverisierten Hartschaum beigemengt. Bevorzugt bildet der pulverisierte Hartschaum einen Masseanteil an dem Funktionswerkstoff von mehr als 60 %, bevorzugt von mehr als 75 %, besonders bevorzugt von mehr als 85 %. Optional umfasst das Verfahren einen weiteren Mischschritt, welcher insbesondere in zumindest einer Einstellung der Fertigungsanlage den Mischschritt ersetzt, insbesondere zur Herstellung des Funktionswerkstoffs mit einer Rohdichte von mehr als 500 kg/m³ und/oder mehr als 600 kg/m³, in welchem das Bindemittel mit einem Massenanteil von mehr als 10 % insbesondere bis zu 12 %, bevorzugt bis zu 15 %, besonders bevorzugt bis zu 18 %, bezogen auf eine Gesamtmasse des Funktionswerkstoffs beigemengt wird. Durch die erfindungsgemäße Ausgestaltung kann der Funktionswerkstoff mit einer vorteilhaft geringen Wärmeleitfähigkeit hergestellt werden. Insbesondere können gesundheitsgefährdende Bestandteile der Rohmasse vorteilhaft gering gehalten werden. Insbesondere kann der Funktionswerkstoff vorteilhaft kostengünstig hergestellt werden.

Des Weiteren wird vorgeschlagen, dass in zumindest einem Verfahrensschritt die Rohmasse, der pulverisierte Hartschaum und/oder das Bindemittel mit zumindest einem organischen und/oder anorganischen Füllstoff versetzt wird. Vorzugsweise wird der Füllstoff vor und/oder während des Mischschritts zugeführt. Besonders bevorzugt wird der Füllstoff dem pulverisierten Hartschaum vor dem Mischschritt zugeführt, insbesondere zusammen mit dem pulverisierten Hartschaum dem Durchlaufmischer zugeführt. Der Füllstoff ist vorzugsweise als ein Feststoff ausgebildet, der in Form eines Pulvers oder eines Granulats dem pulverisierten Hartschaum und/oder dem Bindemittel beigegeben wird. Alternativ ist der Füllstoff oder ein weiterer Füllstoff als Fasermaterial ausgebildet, welches zumindest im Wesentlichen aus mineralischen Fasern oder nichtmineralischen Fasern wie beispielsweise Glasfasern, Kohlenstofffasern, Keramikfasern oder Basaltfasern gebildet ist. Der Füllstoff weist vorzugsweise einen Masseanteil an der Gesamtmasse des Funktionswerkstoffs von weniger als 20 % auf. Vorzugsweise weist der Füllstoff einen Masseanteil an der Gesamtmasse des Funktionswerkstoffs von mehr als 1 %, insbesondere mehr als 2 %, auf. Durch die erfindungsgemäße Ausgestaltung kann der Funktionswerkstoff vorteilhaft anwendungsabhängig mit zusätzlichen Eigenschaften versehen werden, insbesondere mit einer vorteilhaft geringen, insbesondere negativen, Beeinträchtigung von mechanischen und thermischen Eigenschaften des Funktionswerkstoffs.

Ferner wird vorgeschlagen, dass der Füllstoff den Funktionswerkstoff schwerentflammbar nach Brandreaktionsklasse C gemäß DIN 13501-1 ausbildet. Der Füllstoff weist bei Temperaturbeaufschlagung vorzugsweise ein Blähverhalten auf, durch das sich eine Rohdichte des Füllstoffs ändert, wenn eine Temperatur des Funktionswerkstoffs eine Aktivierungstemperatur des Additivs überschreitet. In einem Grundzustand weist der Füllstoff eine Rohdichte auf, welche insbesondere kleiner als 5 g/cm³ ist. Bevorzugt liegt die Rohdichte des Füllstoffs zwischen 1 g/cm³ und 3 g/cm³. Der Füllstoff weist bevorzugt eine Expansionsrate von zumindest 30 cm³/g, insbesondere bei Standardatmosphäre, auf. Vorzugsweise ist die Expansionsrate des Füllstoffs größer als 100 cm³/g und liegt bevorzugt in einem Bereich zwischen 250 cm³/g und 400 cm³/g, insbesondere bei Standardatmosphäre. Das Blähverhalten des Füllstoffs bewirkt, insbesondere bei Standardatmosphäre, eine Volumenvergrößerung des Füllstoffs um einen Faktor von vorzugsweise zumindest 10, wenn der Funktionswerkstoff auf eine Temperatur erwärmt wird, die größer ist als die Aktivierungstemperatur des Additivs. Der Füllstoff weist insbesondere eine Aktivierungstemperatur von zumindest 90 Grad Celsius auf. Vorzugsweise liegt die Aktivierungstemperatur bei über 120 Grad Celsius. Insbesondere wird die Rohmasse in dem Pressschritt mit einer Temperatur unterhalb der Aktivierungstemperatur beaufschlagt. Wird der Funktionswerkstoff mit dem Füllstoff auf die Aktivierungstemperatur des Füllstoffs erwärmt, dehnt sich der Füllstoff vorzugswiese aus. Ein Volumenanteil des Füllstoffs verändert sich, wenn eine Temperatur des Funktionswerkstoffs größer wird als die Aktivierungstemperatur des Füllstoffs. Der Füllstoff weist einen Kohlenstoffgehalt auf, der vorzugsweise zumindest 85 % beträgt, grundsätzlich aber auch niedriger sein kann. Der Füllstoff umfasst vorzugsweise Graphit. Der Füllstoff ist besonders bevorzugt als ein Blähgraphit ausgebildet. Der Füllstoff weist insbesondere Moleküle einer Säure auf, die zwischen Schichten des Graphits eingelagert sind. Wird der Füllstoff über die Aktivierungstemperatur erwärmt, dehnen sich insbesondere die Schichten aus und das Volumen vergrößert sich. Der Funktionswerkstoff weist vorzugsweise ein Brandverhalten entsprechend der Baustoffklasse B1 gemäß DIN 4102-1 auf. Durch die erfindungsgemäße Ausgestaltung kann ein vorteilhaft sicherer Funktionswerkstoff hergestellt werden, der insbesondere in einer vorteilhaft großen Bandbreite an Einsatzgebieten verwendbar, insbesondere zulassungsfähig, ist.

Weiterhin wird vorgeschlagen, dass in dem Pressschritt bei zumindest einer Einstellung der Durchlaufpresse die Rohmasse zu einer Platte mit einer Materialstärke von weniger als 8 mm, insbesondere ohne nachträgliches Schleifen, von der Durchlaufpresse verpresst wird. Der weitere Stetigförderer umfasst insbesondere eine Förderrichtung von dem Durchlaufmischer, insbesondere durch die Durchlaufvorrichtung hindurch, zu der Durchlaufpresse und insbesondere durch die Durchlaufpresse hindurch weiter zu der Konfektionierungsstation. Die Förderrichtung ist bevorzugt parallel zu einer Geraden. Alternativ umfasst die Förderrichtung zumindest eine Kurve, einen Umlenkpunkt oder dergleichen. Der Stetigförderer umfasst eine zu der Förderrichtung senkrechte maximale Förderbreite, auf welcher die Rohmasse in einem Rohmassendosierschritt mittels einer an dem Durchlaufmischer angeordneten Aufschüttvorrichtung der Förderanlage verteilt wird und welche vorzugsweise entlang der Förderrichtung einen konstanten Wert aufweist. Insbesondere bringt die Aufschüttvorrichtung die Rohmasse mit einer maximalen Breite parallel zur Förderbreite des weiteren Stetigförderers von zumindest 50 cm, bevorzugt von mehr als 80 cm, besonders bevorzugt von mehr als 1,1 m, auf den weiteren Stetigförderer auf. Insbesondere erstreckt sich die Rohmasse während des laufenden Verfahrens parallel zu der Förderrichtung des weiteren Stetigförderers von einer Aufschüttstelle des weiteren Stetigförderers bis zu der Durchlaufpresse ununterbrochen, insbesondere über mehrere Meter hinweg. Eine Materialstärke der Rohmasse und des Funktionswerkstoffs erstreckt sich insbesondere senkrecht zu der Förderrichtung und senkrecht zu der Förderbreite. Insbesondere reduziert die Durchlaufpresse die Materialstärke der Rohmasse auf die Materialstärke des Funktionswerkstoffs. Insbesondere wird die Durchlaufpresse in zumindest einem Verfahrensschritt so eingestellt, dass sich eine Materialstärke des Funktionswerkstoffs von weniger als 8 mm, insbesondere von weniger als 7 mm, bevorzugt von weniger als 6 mm, besonders bevorzugt von weniger als 5 mm, ergibt. Optional ist die Durchlaufpresse auch für größere Materialstärken als 8 mm einstellbar. Insbesondere wird in zumindest einem Verfahrensschritt die Rohmasse zu dem Funktionswerkstoff mit einer Materialstärke von mehr als 10 mm, insbesondere von mehr als 40 mm, bevorzugt von mehr als 70 mm, besonders bevorzugt bis zu 100 mm, verpresst. Insbesondere trennt die Konfektionierungsstation die Platte mit einer einstellbaren Länge parallel zur Förderrichtung von dem aus der Durchlaufpresse austretenden Endlosband des Funktionswerkstoffs ab. Die Konfektionierungsstation ist insbesondere dazu eingerichtet, die Platte bei einer maximalen Länge parallel zur Förderrichtung von mehr als 1 m, bevorzugt von mehr als 5 m, besonders bevorzugt von mehr als 20 m abzutrennen und insbesondere die abgetrennte Platte einzeln oder mehrere Platten stapelweise einer Transport-, Verpackungs- und/oder Lagervorrichtung zuzuführen. Durch die erfindungsgemäße Ausgestaltung kann ein vorteilhaft dünner Funktionswerkstoff mit insbesondere hoher Dämmwirkung hergestellt werden. Insbesondere kann der Funktionswerkstoff auch bei Anwendungen eingesetzt werden, welche wenig verfügbaren Bauraum aufweisen.

Darüber hinaus wird vorgeschlagen, dass in dem Pressschritt die Rohmasse zu einer Platte mit einer Materialstärke verpresst wird, deren maximal zulässige Toleranz höchstens 1 mm, insbesondere ohne nachträgliches Schleifen, beträgt. Das Verfahren umfasst optional einen Schleifschritt, um eine Oberflächengüte des Funktionswerkstoffs nach dem Pressschritt zu erhöhen, wobei die maximal zulässige Toleranz der Materialstärke bereits durch den Pressschritt erreicht wird. Bevorzugt entfällt der Schleifschritt, wodurch die Platte insbesondere eine vorteilhaft hohe Adhäsion zur nachträglichen Aufbringung einer Deckschicht, beispielsweise einer Funktionsschicht und/oder Dekorschicht, aufweist. Durch die erfindungsgemäße Ausgestaltung kann ein Materialverlust zu einer Begradigung des Funktionswerkstoffs vorteilhaft gering gehalten werden.

Weiter wird vorgeschlagen, dass in zumindest einem Verfahrensschritt der Funktionswerkstoff pulverisiert wird und der pulverisierte Hartschaum zumindest teilweise durch den pulverisierten Funktionswerkstoff ersetzt wird. Insbesondere ist/sind der Funktionswerkstoff und Objekte, die aus dem Funktionswerkstoff hergestellt sind, im Rahmen des Verfahrens recycelbar. Vorzugsweise wird der Funktionswerkstoff in dem Zerkleinerungsschritt pulverisiert, insbesondere gemeinsam mit oder getrennt von dem Hartschaumstoff. Optional werden Bindemittelreste des Funktionswerkstoffs, insbesondere massenabhängig und/oder dichteabhängig, aus dem pulverisierten Funktionswerkstoff ausgefiltert. Alternativ werden die Bindemittelreste in dem pulverisierten Funktionswerkstoff belassen. Der pulverisierte Funktionswerkstoff wird vorzugsweise mit, insbesondere reinerem, pulverisierten Hartschaum in dem Mischschritt oder in dem Zerkleinerungsschritt vermengt. Alternativ wird der pulverisierte Hartschaum vollständig durch den pulverisierten Funktionswerkstoff ersetzt. Durch die erfindungsgemäße Ausgestaltung kann vorteilhaft ein geschlossener Kreislauf für den Hartschaum etabliert werden. Insbesondere kann der Funktionswerkstoff vorteilhaft ressourcenschonend und vorteilhaft umweltfreundlich hergestellt werden.

Des Weiteren wird vorgeschlagen, dass in zumindest einem Verfahrensschritt des Verfahrens eine Offenzeit der Rohmasse in Abhängigkeit von einer Beschaffenheit des zu produzierenden Funktionswerkstoffs eingestellt wird. Die Offenzeit bezeichnet insbesondere die Zeitdauer von dem Bindemitteldosierschritt bis zu dem Pressschritt. Insbesondere ist die eingestellte Offenzeit länger als eine minimale Offenzeit, welche insbesondere zu einer Durchdringung des pulverisierten Hartschaums mit dem Bindemittel und des aktvierten Wassers und zu einer möglichst homogenen Verteilung des Bindemittels und des aktvierten Wassers in dem pulverisierten Hartschaum notwendig ist. Insbesondere ist die eingestellte Offenzeit kürzer als eine maximale Offenzeit, um ein Austrocknen der Rohmasse, chemische Reaktionen innerhalb der Rohmasse, insbesondere eine vorzeitige Polyaddition und/oder Polykondensation des Bindemittels oder dergleichen möglichst gering zu halten. Die Offenzeit kann von einem Bediener oder von der Steuereinheit in Abhängigkeit von der Beschaffenheit des zu produzierenden Funktionswerkstoffs eingestellt werden. Insbesondere wird die Offenzeit über eine Fördergeschwindigkeit des Durchlaufmischers und/oder des weiteren Stetigförderers festgelegt. Die Beschaffenheit des zu produzierenden Funktionswerkstoffs, von welchem die Offenzeit, insbesondere die minimale und die maximale Offenzeit, abhängt, umfasst beispielsweise eine Dichte des Funktionswerkstoffs, die Materialstärke des Funktionswerkstoffs, eine Anzahl an Schichten in dem Funktionswerkstoff. Insbesondere wird die Offenzeit umso höher eingestellt, je dichter, je dicker und/oder je schichtenreicher der zu produzierende Funktionswerkstoff sein soll. Insbesondere wird die Offenzeit umso niedriger eingestellt, je weniger dicht und/oder je dünner der zu produzierende Funktionswerkstoff ist und/oder je weniger Schichten er aufweist. Durch die erfindungsgemäße Ausgestaltung kann die Beschaffenheit des Funktionswerkstoffs vorteilhaft flexibel angepasst werden. Insbesondere kann dieselbe Fertigungsanlage, insbesondere ohne Umrüstung, vorteilhaft verschieden ausgestaltete Funktionswerkstoffe herstellen. Insbesondere können verschiedene Funktionswerkstoffe vorteilhaft schnell und mit vorteilhaft zuverlässiger Güte hergestellt werden.

Weiter wird vorgeschlagen, dass die Rohmasse in dem Rohmassendosierschritt auf eine, insbesondere zumindest temporär an dem Funktionswerkstoff angeordnete, Trennschicht aufgebracht wird, welche nach dem Pressvorgang von dem Funktionswerkstoff entfernt wird. Vorzugsweise ist die Trennschicht als Trennpapier oder als Trennfolie, beispielsweise als Teflonfolie oder als Vlies, ausgebildet. Insbesondere wird die Trennschicht vor oder zu Beginn des Rohmassendosierschritts auf den weiteren Stetigförderer aufgezogen. Besonders bevorzugt wird anschließend an oder am Ende des Rohmassendosierschritts, insbesondere vor dem Pressschritt, eine weitere Trennschicht auf einer von der Trennschicht abgewandten Seite der Rohmasse angeordnet.

Insbesondere bilden die Trennschicht, die Rohmasse und die weitere Trennschicht vor dem Pressschritt eine Sandwichstruktur. Besonders bevorzugt werden/wird die Trennschicht und/oder die weitere Trennschicht nach dem Pressschritt oder nach dem Konfektionierungsschritt von dem Funktionswerkstoff abgezogen, alternativ abgeschliffen. Durch die erfindungsgemäße Ausgestaltung kann die Durchlaufpresse vorteilhaft verschleißarm betrieben werden. Insbesondere können Ablagerungen innerhalb der Durchlaufpresse und/oder dem Stetigförderer vorteilhaft gering gehalten werden. Insbesondere kann der Pressschritt vorteilhaft lange wartungsfrei betrieben werden. Des Weiteren kann durch ein Abziehen der Trennschicht eine vorteilhaft raue Oberfläche des Funktionswerkstoffs hergestellt werden, auf welcher eine nachträglich aufgebrachte Beschichtung vorteilhaft zuverlässig haftet.

Ferner wird vorgeschlagen, dass die Rohmasse in dem Rohmassendosierschritt auf eine Deckschicht aufgebracht wird, welche nach dem Pressvorgang stoffschlüssig mit der ausgehärteten Rohmasse verbunden ist. Die Deckschicht wird vor oder zu Beginn des Rohmassendosierschritts auf der Trennschicht oder auf dem weiteren Stetigförderer angeordnet. Optional wird anschließend an oder am Ende des Rohmassendosierschritts, insbesondere vor dem Pressschritt, eine weitere Deckschicht auf einer von der Deckschicht abgewandten Seite der Rohmasse angeordnet. Insbesondere bilden die Deckschicht, die Rohmasse und die weitere Deckschicht vor dem Pressschritt eine Sandwichstruktur. Die Deckschicht und die weitere Deckschicht können aus dem gleichen oder aus unterschiedlichen Materialen gefertigt sein. Die Deckschicht und/oder die weitere Deckschicht können/kann zumindest im Wesentlichen aus einem organischen Material, beispielsweise Melaminharz und/oder Polyvinylchlorid (PVC), oder einem anorganischen Material, beispielsweise Aluminium, gebildet sein. Besonders bevorzugt werden/wird die Trennschicht und/oder die weitere Trennschicht, sofern vorhanden, nach dem Pressschritt oder nach dem Konfektionierungsschritt von den Deckschichten abgezogen, alternativ abgeschliffen. Durch die erfindungsgemäße Ausgestaltung kann der Funktionswerkstoff mit zusätzlichen Eigenschaften vorteilhaft anwendungsabhängig ausgestattet werden. Beispielsweise können Deckschichten als Feuchtebarriere, als antimikrobiologische Schutzschicht, als Witterungsschutz, als Schalldämmung, als hochwertiges Dekor oder dergleichen ausgebildet sein. Insbesondere kann auf einen nachgelagerten Aufbringungsschritt zum Aufbringen der Deckschichten auf den Funktionswerkstoff verzichtet werden, so dass ein Funktionswerkstoff mit Deckschichten vorteilhaft schnell und vorteilhaft kostengünstig hergestellt werden kann.

Die Rohmasse umfasst vorzugsweise zumindest den pulverisierten Hartschaum und/oder pulverisierten Funktionswerkstoff. Die Rohmasse umfasst insbesondere das flüssige Bindemittel. Die Rohmasse umfasst vorzugsweise das aktivierte Wasser oder Wasser, insbesondere ohne Aktivator. Vorzugsweise hat das aktivierte Wasser oder das Wasser einen Masseanteil an der Rohmasse von zumindest 0,5 %, bevorzugt mehr als 1 %, besonders bevorzugt mehr als 2 %. Vorzugsweise ist der Masseanteil des aktivierten Wassers oder des Wassers an der Rohmasse geringer als 7,5 %, bevorzugt geringer als 5 %, besonders bevorzugt geringer als 3 %. Die Rohmasse umfasst vorzugsweise den Füllstoff. Vorzugsweise ist der pulverisierte Hartschaum und/oder der pulverisierte Funktionswerkstoff, das Bindemittel, optional der Füllstoff sowie das aktivierte Wasser oder das Wasser, in der Rohmasse homogen verteilt, wobei insbesondere bei mehreren Schichten die Verteilung zumindest schichtweise homogen ist. Durch die Ausgestaltung kann eine Rohmasse für den Funktionswerkstoff bereitgestellt werden, die vorteilhaft kontinuierlich und vorteilhaft schnell verarbeitet werden kann.

Weiterhin wird ein Funktionswerkstoff, hergestellt durch ein erfindungsgemäßes Verfahren, vorgeschlagen. Der Funktionswerkstoff weist insbesondere eine Wärmeleitfähigkeit gemäß EN 12667 von höchstens 0,10 W/(m•K), vorzugsweise weniger als 0,07 W/(m•K), auf. Der Funktionswerkstoff weist eine Rohdichte von insbesondere mehr als 150 kg/m³, bevorzugt mehr als 300 kg/m³, besonders bevorzugt mehr als 450 kg/m³ und insbesondere eine Druckspannung nach DIN EN 826 größer als 1 MPa, bevorzugt größer als 3 MPa, besonders bevorzugt mehr als 6 MPa, auf. Der Funktionswerkstoff ist vorzugsweise fäulnisfest und unverrottbar. Der Funktionswerkstoff ist vorzugsweise beständig gegen Mineralöle, Lösemittel sowie verdünnte Laugen und Säuren. Vorzugsweise weist der Funktionswerkstoff eine Biegefestigkeit gemäß DIN EN 12089 größer als 1 MPa, bevorzugt größer als 2 MPa, besonders bevorzugt mehr als 4 MPa, auf. Bevorzugt weist der Funktionswerkstoff eine Scherfestigkeit gemäß DIN EN 12090 größer als 250 kPa, bevorzugt von mehr als 500 kPa, besonders bevorzugt von mehr als 1 MPa, auf. Der Funktionswerkstoff weist eine Schubfestigkeit gemäß DIN EN 12090 von insbesondere mehr als 250 kPa, bevorzugt von mehr als 500 kPa, besonders bevorzugt von mehr als 1 MPa, auf. Zudem weist der Funktionswerkstoff vorzugsweise eine Schraubenauszugsfestigkeit gemäß DIN EN 14358 von zumindest 4,5 N/mm², bevorzugt mehr als 6 N/mm², besonders bevorzugt mehr als 7,5 N/mm², für einen Oberflächenauszug einer Holzschraube 6 x 60 auf. Eine Grundzusammensetzung des Funktionswerkstoffs, die lediglich aus dem pulverisierten Hartschaum und dem Bindemittel gebildet ist, weist insbesondere ein Brandverhalten auf, das einer Brandreaktionsklasse E gemäß DIN EN 13501-1 und einer Baustoffklasse B2 gemäß DIN 4102-1 entspricht. Durch den Füllstoff weist der Funktionswerkstoff ein Brandverhalten auf, das zumindest einer Brandreaktionsklasse C gemäß DIN EN 13501-1 und zumindest einer Baustoffklasse B1 gemäß DIN 4102-1 entspricht. Durch die erfindungsgemäße Ausgestaltung kann ein vorteilhaft stabiler und gleichzeitig vorteilhaft wärmedämmender Funktionswerkstoff bereitgestellt werden, der vorteilhaft kostengünstig, vorteilhaft ressourcenschonend, vorteilhaft schnell und/oder mit vorteilhaft geringen Eigenschaftsschwankungen, insbesondere Rohdichteschwankungen, herstellbar ist.

Das erfindungsgemäße Verfahren und/oder der erfindungsgemäße Funktionswerkstoff sollen/soll hierbei nicht auf die oben beschriebene Anwendung und Ausführungsform beschränkt sein. Insbesondere können/kann das erfindungsgemäße Verfahren und/oder der erfindungsgemäße Funktionswerkstoff zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung eines erfindungsgemäßen Verfahrens und
- Fig. 2: eine schematische Darstellung eines erfindungsgemäßen Funktionswerkstoffs.

### Beschreibung des Ausführungsbeispiels

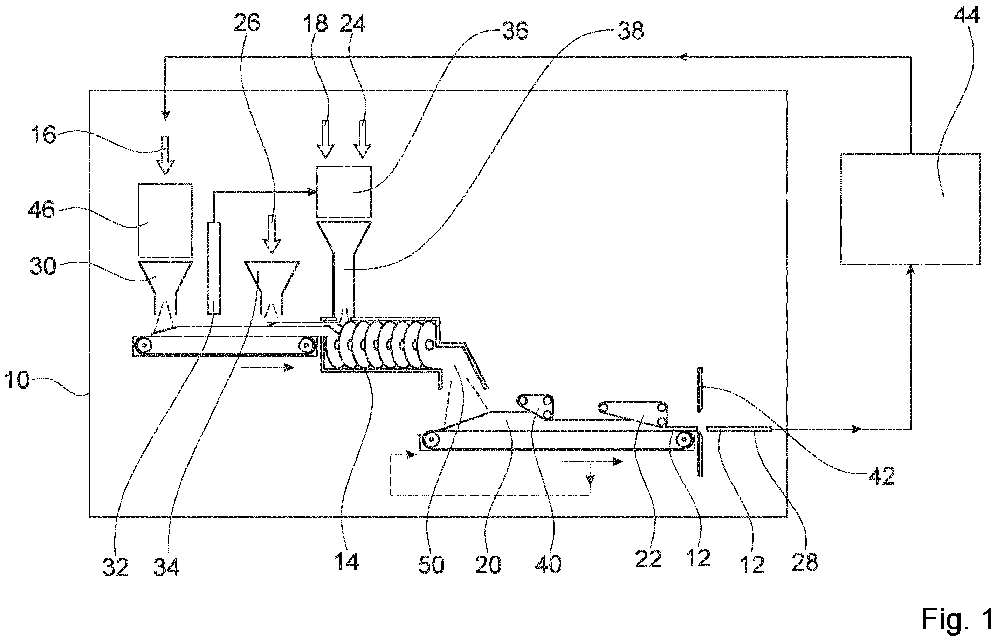

Die Figur 1 zeigt einen Ablauf eines Verfahrens 10 zur Herstellung eines Funktionswerkstoffs 12. Der Funktionswerkstoff 12 wird aus zumindest einem Hartschaum 16 und einem Bindemittel 18 hergestellt. Der Hartschaum 16 wird pulverisiert, mit dem Bindemittel 18 versetzt und zu dem Funktionswerkstoff 12 verpresst.

Das Verfahren 10 umfasst insbesondere einen Zerkleinerungsschritt 46. Das Verfahren 10 umfasst einen Hartschaumdosierschritt 30. Das Verfahren 10 umfasst optional einen Feuchtigkeitsmessschritt 32. Das Verfahren 10 umfasst vorzugsweise einen Füllstoffdosierschritt 34. Das Verfahren 10 umfasst vorzugsweise einen Bindemittelvormischschritt 36. Das Verfahren 10 umfasst einen Bindemitteldosierschritt 38. Das Verfahren 10 umfasst einen Mischschritt 14. Das Verfahren 10 umfasst vorzugsweise einen Rohmassendosierschritt 50. Das Verfahren 10 umfasst insbesondere einen Vorpressschritt 40. Das Verfahren 10 umfasst einen Pressschritt 22. Das Verfahren 10 umfasst vorzugsweise einen Konfektionierungsschritt 42. Das Verfahren 10 läuft zumindest von dem Mischschritt 14 bis einschließlich des Pressschritts 22 kontinuierlich ab. Besonders bevorzugt läuft das Verfahren 10 von dem Hartschaumdosierschritt 30 bis einschließlich des Pressschritts 22 kontinuierlich ab. Insbesondere werden der Hartschaumdosierschritt 30, der Füllstoffdosierschritt 34, optional der Bindemittelvormischschritt 36, der Bindemitteldosierschritt 38, der Mischschritt 14, der Vorpressschritt 40 und der Pressschritt 22 kontinuierlich und insbesondere zeitlich parallel zueinander ausgeführt. Der Feuchtigkeitsmessschritt 32 kann kontinuierlich, regelmäßig oder stichprobenartig durchgeführt werden. Der Konfektionierungsschritt 42 wird diskontinuierlich ausgeführt, insbesondere ausgelöst durch eine Zeitmessung und/oder Längenmessung an dem Funktionswerkstoff 12. Der Zerkleinerungsschritt 46 kann kontinuierlich oder diskontinuierlich erfolgen. Vorzugsweise wird der Zerkleinerungsschritt 46 unabhängig von den anderen Verfahrensschritten des Verfahrens 10 durchgeführt.

Der Hartschaum 16 weist vor einer Pulverisierung eine Wärmleitfähigkeit von weniger als 0,037 W/Km auf. In dem Zerkleinerungsschritt 46 wird der pulverisierte Hartschaum 16 aus Polyurethan-Hartschaum, kurz PUR, aus Polyisocyanurat-Hartschaum, kurz PIR, und/oder aus Phenol-Hartschaum hergestellt. In dem Zerkleinerungsschritt 46 wird der Hartschaum 16 mechanisch zerkleinert, insbesondere pulverisiert. Vorzugsweise wird der pulverisierte Hartschaum 16 in einem Pulversilo zwischengelagert. In dem Hartschaumdosierschritt 30 wird der pulverisierte Hartschaum 16 kontinuierlich auf einen Stetigförderer aufgebracht. Der Stetigförderer transportiert den pulverisierten Hartschaum 16 zu einem Durchlaufmischer. In dem Feuchtigkeitsmessschritt 32 wird vorzugsweise ein Feuchtegehalt des pulverisierten Hartschaums 16 ermittelt, beispielsweise mittels eines Feuchtemessgeräts oder mittels Wägung eines Fixvolumens des pulverisierten Hartschaums 16 und Vergleich mit einer Referenz bekannter Feuchte, insbesondere ohne Feuchte. Der Feuchtigkeitsmessschritt 32 kann vor oder nach dem Hartschaumdosierschritt 30 erfolgen.

In dem Füllstoffdosierschritt 34 wird der pulverisierte Hartschaum 16 mit zumindest einem organischen und/oder anorganischen Füllstoff 26 versetzt. Der Füllstoff 26 bildet den Funktionswerkstoff 12 schwerentflammbar nach Brandreaktionsklasse C gemäß DIN 13501-1 aus. Der Füllstoff 26 ist insbesondere als Blähgraphit ausgebildet. Der Füllstoffdosierschritt 34 erfolgt vorzugsweise nach dem Feuchtigkeitsmessschritt 32 und insbesondere vor dem Mischschritt 14. Besonders bevorzugt wird der Füllstoff 26 in dem Füllstoffdosierschritt 34 kontinuierlich auf den pulverisierten Hartschaum 16 aufgetragen und insbesondere zusammen mit diesem von dem Stetigförderer dem Durchlaufmischer zugeführt.

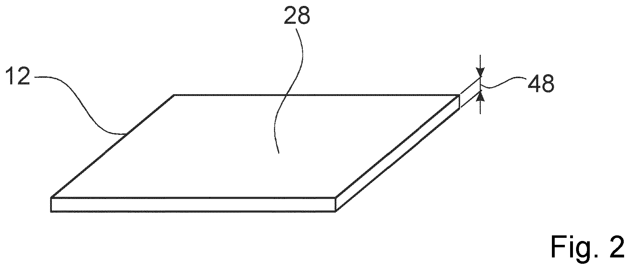

In dem Bindemittelvormischschritt 36 wird dem Bindemittel 18 aktiviertes Wasser 24 mit einem Masseanteil eines Aktivators von höchstens 3 % beigemengt. Vorzugsweise steuert oder regelt eine Steuereinheit die Menge des zugegebenen aktivierten Wassers 24 in Abhängigkeit von dem Feuchtigkeitsmessschritt 32 und insbesondere in Abhängigkeit von einer zu erzielenden Dichte und Materialstärke 48 des Funktionswerkstoffs 12 (vgl. Fig. 2). Das Bindemittel 18 wird in dem Bindemitteldosierschritt 38 vermischt mit dem aktivierten Wasser 24 dem pulverisierten Hartschaum 16, insbesondere innerhalb des Durchlaufmischers, kontinuierlich zugegeben. Alternativ werden das Bindemittel 18 und das aktivierte Wasser 24 separat voneinander in den Durchlaufmischer eingelassen, insbesondere eingesprüht.

In dem Mischschritt 14 werden der pulverisierter Hartschaum 16 und das Bindemittel 18, insbesondere zusammen mit dem Füllstoff 26 und dem aktivierten Wasser 24, zu einer Rohmasse 20 vermengt. Dem pulverisierten Hartschaum 16 wird in dem Mischschritt 14 das Bindemittel 18 mit einem Masseanteil von weniger als 10 % bezogen auf Gesamtmasse des Funktionswerkstoffs 12 beigemengt. In dem Rohmassendosierschritt 50 übergibt eine an dem Durchlaufmischer angeordnete Aufschüttvorrichtung die Rohmasse 20 kontinuierlich an einen weiteren Stetigförderer, insbesondere an ein Laufband. Die Rohmasse 20 wird in dem Rohmassendosierschritt 50 optional auf eine Deckschicht aufgebracht, welche nach dem Pressvorgang 22 stoffschlüssig mit der ausgehärteten Rohmasse verbunden ist. Die Rohmasse 20 wird in dem Rohmassendosierschritt 50 optional auf eine Trennschicht aufgebracht wird, welche nach dem Pressvorgang 22 von dem Funktionswerkstoff 12 entfernt wird. Wenn der Funktionswerkstoff 12 eine Deckschicht umfassen soll, wird die Trennschicht auf dem weiteren Stetigförderer, die Deckschicht auf der Trennschicht und die Rohmasse 20 auf der Deckschicht aufgebracht. Eine Offenzeit der Rohmasse 20 wird in Abhängigkeit von einer Beschaffenheit des zu produzierenden Funktionswerkstoffs 12 eingestellt. Insbesondere wird eine Fördergeschwindigkeit des weiteren Stetigförderers in Abhängigkeit von der Beschaffenheit des zu produzierenden Funktionswerkstoffs 12 von der Steuereinheit eingestellt oder geregelt.

In dem Vorpressschritt 40 wird die Rohmasse 20 mittels einer Durchlaufvorrichtung vorverdichtet. Optional wird auf die vorverdichtete Rohmasse 20 zumindest eine weitere Schicht der Rohmasse 20 oder einer weiteren Rohmasse 20 aufgetragen und anschließend vorverdichtet. In dem Pressschritt 22 wird die, insbesondere vorverdichtete, Rohmasse 20 zu dem Funktionswerkstoff 12 verpresst. Insbesondere beaufschlagt eine Durchlaufpresse in dem Pressschritt 22 die Rohmasse 20 mit Druck und Temperatur. Vorzugsweise ist die von der Durchlaufpresse verursachte Temperatur geringer als eine Aktivierungstemperatur des Füllstoffs 26, bei welcher dieser vorzugsweise ein Blähverhalten aufweist. Die Durchlaufpresse verdampft in dem Pressschritt 22 das aktivierte Wasser 24. Die Durchlaufpresse schließt das verdampfte Wasser 24, während des Pressschritts 22 größtenteils in der Rohmasse 20, insbesondere bis das Bindemittel 18 ausgehärtet ist, ein. Insbesondere an einem Auslass der Durchlaufpresse für den Funktionswerkstoff 12 aus der Durchlaufpresse heraus gibt der Funktionswerkstoff 12 das verdampfte Wasser 24 kontinuierlich ab. In dem Pressschritt 22 wird bei zumindest einer Einstellung der Durchlaufpresse die Rohmasse 20 zu einer Platte 28 mit der Materialstärke 48 von weniger als 8 mm, insbesondere ohne nachträgliches Schleifen, von der Durchlaufpresse verpresst. Die Platte 28 aus dem Funktionswerkstoff 12 ist beispielhaft in Figur 2 gezeigt. In dem Pressschritt 22 wird die Rohmasse 20 zu der Platte 28 mit der Materialstärke 48 verpresst, deren maximal zulässige Toleranz höchstens 1 mm insbesondere ohne nachträgliches Schleifen, beträgt. In dem Konfektionierungsschritt 42 wird die Platte 28 von dem kontinuierlich aus der Durchlaufpresse austretenden Funktionswerkstoff 12 abgetrennt, insbesondere abgeschnitten und/oder abgesägt.

Die Platte 28 aus dem Funktionswerkstoff 12 findet beispielsweise Verwendung 44 als Wärmedämmung und/oder als Konstruktionswerkstoff. Die Platte 28 aus dem Funktionswerkstoff 12 ist insbesondere nach der Verwendung 44 mittels des Verfahrens 10 recycelbar. Insbesondere ist ein vor oder während der Verwendung 44 anfallender Verschnitt der Platte 28 recycelbar. Der Funktionswerkstoff 12 wird pulverisiert, sodass der pulverisierte Hartschaum zumindest teilweise durch den pulverisierten Funktionswerkstoff ersetzt werden kann.

### Bezugszeichen

- 10: Verfahren
- 12: Funktionswerkstoff
- 14: Mischschritt
- 16: Hartschaum
- 18: Bindemittel
- 20: Rohmasse
- 22: Pressschritt
- 24: aktiviertes Wasser
- 26: Füllstoff
- 28: Platte
- 30: Hartschaumdosierschritt
- 32: Feuchtigkeitsmessschritt
- 34: Füllstoffdosierschritt
- 36: Bindemittelvormischschritt
- 38: Bindemitteldosierschritt
- 40: Vorpressschritt
- 42: Konfektionierungsschritt
- 44: Verwendung
- 46: Zerkleinerungsschritt
- 48: Materialstärke
- 50: Rohmassedosierschritt

## Patentansprüche

1. Verfahren zur Herstellung eines Funktionswerkstoffs, wobei in zumindest einem Mischschritt (14) ein Hartschaum (16) und zumindest ein Bindemittel (18) zu einer Rohmasse vermengt werden und wobei in zumindest einem Pressschritt (22) die Rohmasse zu dem Funktionswerkstoff verpresst wird, wobei das Verfahren zumindest von dem Mischschritt (14) bis einschließlich des Pressschritts (22) kontinuierlich abläuft, wobei in dem Pressschritt (22) die Rohmasse einer Durchlaufpresse kontinuierlich zugeführt, die Rohmasse kontinuierlich von der Durchlaufpresse verpresst und der Funktionswerkstoff kontinuierlich von der Durchlaufpresse ausgegeben wird, **dadurch gekennzeichnet, dass** der Hartschaum (16) in dem zumindest einem Mischschritt (14) pulverisiert ist, zumindest im Wesentlichen aus einem Duroplast gebildet ist und eine durchschnittliche Partikelgröße kleiner als 5 mm aufweist.

2. Verfahren nach Anspruch 1, **dadurch gekennzeichnet, dass** in zumindest einem Verfahrensschritt der pulverisierte Hartschaum (16) aus Polyurethan-Hartschaum, kurz PUR, aus Polyisocyanurat-Hartschaum, kurz PIR, und/oder aus Phenol-Hartschaum hergestellt wird.

3. Verfahren nach Anspruch 1 oder 2, **dadurch gekennzeichnet, dass** in zumindest einem Verfahrensschritt dem Bindemittel (18) aktiviertes Wasser (24) mit einem Masseanteil eines Aktivators von höchstens 3 % beigemengt wird.

4. Verfahren nach einem der vorhergehenden Ansprüche, **dadurch gekennzeichnet, dass** dem pulverisierten Hartschaum (16) in dem Mischschritt (14) das Bindemittel (18) mit einem Masseanteil von weniger als 10 % bezogen auf eine Gesamtmasse des Funktionswerkstoffs beigemengt wird.

5. Verfahren nach einem der vorhergehenden Ansprüche, **dadurch gekennzeichnet, dass** in zumindest einem Verfahrensschritt die Rohmasse, der pulverisierte Hartschaum (16) und/oder das Bindemittel (18) mit zumindest einem organischen und/oder anorganischen Füllstoff (26) versetzt wird.

6. Verfahren nach Anspruch 5, **dadurch gekennzeichnet, dass** der Füllstoff (26) den Funktionswerkstoff schwerentflammbar nach Brandreaktionsklasse C gemäß DIN 13501-1 ausbildet.

7. Verfahren nach einem der vorhergehenden Ansprüche, **dadurch gekennzeichnet, dass** in dem Pressschritt (22) bei zumindest einer Einstellung der Durchlaufpresse die Rohmasse zu einer Platte (28) mit einer Materialstärke von weniger als 8 mm, insbesondere ohne nachträgliches Schleifen, von der Durchlaufpresse verpresst wird.

8. Verfahren nach einem der vorhergehenden Ansprüche, **dadurch gekennzeichnet, dass** in dem Pressschritt (22) die Rohmasse zu einer Platte (28) mit einer Materialstärke verpresst wird, deren maximal zulässige Toleranz höchstens 1 mm, insbesondere ohne nachträgliches Schleifen, beträgt.

9. Verfahren nach einem der vorhergehenden Ansprüche, **dadurch gekennzeichnet, dass** in zumindest einem Verfahrensschritt der Funktionswerkstoff pulverisiert wird und der pulverisierte Hartschaum (16) zumindest teilweise durch den pulverisierten Funktionswerkstoff ersetzt wird.

10. Verfahren nach einem der vorhergehenden Ansprüche, **dadurch gekennzeichnet, dass** in zumindest einem Verfahrensschritt eine Offenzeit der Rohmasse in Abhängigkeit von einer Beschaffenheit des zu produzierenden Funktionswerkstoffs eingestellt wird.

11. Verfahren nach einem der vorhergehenden Ansprüche, **dadurch gekennzeichnet, dass** die Rohmasse in einem Rohmassendosierschritt (50) auf eine Trennschicht aufgebracht wird, welche nach dem Pressvorgang (22) von dem Funktionswerkstoff entfernt wird.

12. Verfahren nach einem der vorhergehenden Ansprüche, **dadurch gekennzeichnet, dass** die Rohmasse in einem Rohmassendosierschritt (50) auf eine Deckschicht aufgebracht wird, welche nach dem Pressvorgang (22) stoffschlüssig mit der ausgehärteten Rohmasse verbunden ist.

13. Funktionswerkstoff hergestellt durch ein Verfahren nach einem der Ansprüche 1 bis 12.

## Claims

1. A method for producing a functional material, wherein in at least one mixing step (14) a rigid foam (16) and at least one binding agent (18) are mixed to form a raw mass, and wherein in at least one pressing step (22) the raw mass is pressed to form the functional material, the method proceeding in a continuous manner at least from the mixing step (14) up to and including the pressing step (22), wherein in the pressing step (22) the raw mass is fed to a throughput press, the raw mass is continuously pressed by the throughput press and the functional material is continuously outputted by the throughput press, **characterized in that** in the at least one mixing step (14) the rigid foam (16) is in a pulverized state, is at least substantially made of a thermoset and has an average particle size less than 5 mm.

2. The method according to claim 1, **characterized in that** in at least one method step the pulverized rigid foam (16) is produced from polyurethane rigid foam, PUR for short, from polyisocyanurate rigid foam, PIR for short, and/or from phenolic rigid foam.

3. The method according to claim 1 or 2, **characterized in that** in at least one method step activated water (24) with a mass fraction of an activator of maximally 3% is mixed into the binding agent (18).

4. The method according to any one of the preceding claims, **characterized in that** in the mixing step (14) the binding agent (18) is mixed into the pulverized rigid foam (16) with a mass fraction of less than 10% relative to a total mass of the functional material.

5. The method according to any one of the preceding claims, **characterized in that** in at least one method step at least one organic and/or inorganic filling material (26) is added to the raw mass, the pulverized rigid foam (16) and/or the binding agent (18).

6. The method according to claim 5, **characterized in that** the filling material (26) makes the functional material difficult to ignite according to combustibility class C of DIN 13501-1.

7. The method according to any one of the preceding claims, **characterized in that** in the pressing step (22), in at least one setting of the throughput press, the raw mass is pressed by the throughput press to form a panel (28) with a material thickness of less than 8 mm, in particular without subsequent grinding.

8. The method according to any one of the preceding claims, **characterized in that** in the pressing step (22) the raw mass is pressed to form a panel (28) with a material thickness whose maximally admissible tolerance is at most 1 mm, in particular without subsequent grinding.

9. The method according to any one of the preceding claims, **characterized in that** in at least one method step the functional material is pulverized and the pulverized rigid foam (16) is substituted at least partially by the pulverized functional material.

10. The method according to any one of the preceding claims, **characterized in that** in at least one method step an open time of the raw mass is set depending on properties of the functional material that is to be produced.

11. The method according to any one of the preceding claims, **characterized in that** in a raw mass metering step (50) the raw mass is applied onto a separating layer, which is removed from the functional material after the pressing step (22).

12. The method according to any one of the preceding claims, **characterized in that** in a raw mass metering step (50) the raw mass is applied onto a cover layer, which is after the pressing step (22) connected to the cured raw mass by substance-to-substance bond.

13. A functional material produced by a method according to any one of claims 1 to 12.

## Revendications

1. Procédé de fabrication d'un matériau fonctionnel, où, dans au moins une étape de mélange (14), une mousse dure (16) et au moins un liant (18) sont mélangés en une masse brute et où, dans au moins une étape de pressage (22), la masse brute est pressée en le matériau fonctionnel, le procédé se déroulant en continu au moins depuis l'étape de mélange (14) jusqu'à l'étape de pressage (22) incluse, où, dans l'étape de pressage (22), la masse brute est amenée en continu à une presse continue, la masse brute est pressée en continu par la presse continue et le matériau fonctionnel est délivré en continu par la presse continue, **caractérisé en ce que** la mousse dure (16) est en état pulvérisé dans l'au moins une étape de mélange (14), est formée au moins essentiellement d'une matière thermodurcissable et présente une taille de particule moyenne inférieure à 5 mm.

2. Procédé selon la revendication 1, **caractérisé en ce que,** dans au moins une étape de procédé, la mousse dure (16) pulvérisée est fabriquée en mousse dure de polyuréthane, en abrégé PUR, en mousse dure de polyisocyanurate, en abrégé PIR, et/ou en mousse dure de phénol.

3. Procédé selon la revendication 1 ou 2, **caractérisé en ce que,** dans au moins une étape de procédé, de l'eau activée (24) avec une proportion massique d'un activateur d'au plus 3 % est ajoutée au liant (18).

4. Procédé selon l'une quelconque des revendications précédentes, **caractérisé en ce que,** dans l'étape de mélange (14), le liant (18) avec une proportion massique inférieure à 10 % par rapport à une masse totale du matériau fonctionnel est ajouté à la mousse dure (16) pulvérisée.

5. Procédé selon l'une quelconque des revendications précédentes, **caractérisé en ce que,** dans au moins une étape de procédé, la masse brute, la mousse dure (16) pulvérisée et/ou le liant (18) sont mélangés avec au moins une charge organique et/ou inorganique (26).

6. Procédé selon la revendication 5, **caractérisé en ce que** la charge (26) forme le matériau fonctionnel difficilement inflammable selon la classe de réaction au feu C selon la norme DIN 13501-1.

7. Procédé selon l'une quelconque des revendications précédentes, **caractérisé en ce que,** dans l'étape de pressage (22), lors d'au moins un réglage de la presse continue, la masse brute est pressée en une plaque (28) avec une épaisseur de matériau inférieure à 8 mm, en particulier sans meulage ultérieur, par la presse continue.

8. Procédé selon l'une quelconque des revendications précédentes, **caractérisé en ce que,** dans l'étape de pressage (22), la masse brute est pressée en une plaque (28) avec une épaisseur de matériau dont la tolérance maximale admissible est d'au plus 1 mm, en particulier sans meulage ultérieur.

9. Procédé selon l'une quelconque des revendications précédentes, **caractérisé en ce que,** dans au moins une étape de procédé, le matériau fonctionnel est pulvérisé et la mousse dure (16) pulvérisée est remplacée au moins en partie par le matériau fonctionnel pulvérisé.

10. Procédé selon l'une quelconque des revendications précédentes, **caractérisé en ce que,** dans au moins une étape de procédé, un temps d'ouverture de la masse brute est réglé en fonction d'une nature du matériau fonctionnel à produire.

11. Procédé selon l'une quelconque des revendications précédentes, **caractérisé en ce que,** dans une étape de dosage de masse brute (50), la masse brute est appliquée sur une couche de séparation qui est enlevée du matériau fonctionnel après l'étape de pressage (22).

12. Procédé selon l'une quelconque des revendications précédentes, **caractérisé en ce que,** dans une étape de dosage de masse brute (50), la masse brute est appliquée sur une couche de recouvrement qui est reliée par liaison de matière à la masse brute durcie après l'étape de pressage (22).

13. Matériau fonctionnel fabriqué par un procédé selon l'une quelconque des revendications 1 à 12.
